# EUROPÄISCHE PATENTANMELDUNG

(11) **EP 2 337 061 A1**
(43) Veröffentlichungstag der Anmeldung: **22.06.2011**
(21) Anmeldenummer: 11160869.1
(22) Anmeldetag: 16.07.2008
(51) Int. Cl.: H01K 1/46

(54) **Elektrische Lampe mit einem Außenkolben, einem Tellerfuß und einer Einbaulampe**

(30) Priorität: 30.07.2007 DE 102007035593
(62) Teilanmeldung aus: 08775125.1
(71) Anmelder: Osram Gesellschaft mit Beschränkter Haftung, 81543 München (DE)
(72) Erfinder: Stark, Roland, 91809, Wellheim (DE); Valent, Iwan, 940, Nové Zámky (SK)

(57) **Zusammenfassung**

Die Erfindung betrifft eine einseitig gesockelte elektrische Lampe (1) mit einem in einem Sockel (2) gelagerten Außenkolben (3) und mindestens einer innerhalb des Außenkolbens (3) mittels eines Montageclips (6) gehaltenen Einbaulampe (4), vorzugsweise einer Hochvolt-Halogenlampe, wobei der Montageclip (6) an einem Tellerfuß (5) fixiert ist und der Tellerfuß (5) einen unteren, vorzugsweise zylindrischen Bereich (8) sowie einen oberen Bereich (9) aufweist und die Querschnittsfläche des oberen Bereichs (9) kleiner ist als die Querschnittsfläche des unteren Bereichs (8).

Der Montageclip (6) ist am oberen Bereich (9) des Tellerfußes (5) fixiert.

## Beschreibung

### Technisches Gebiet

Die Erfindung betrifft eine einseitig gesockelte elektrische Lampe mit einem in einem Sockel gelagerten Außenkolben und mindestens einer innerhalb des Außenkolbens mittels eines Montageclips gehaltenen Einbaulampe, vorzugsweise einer Hochvolt-Halogenlampe, wobei der Montageclip an einem Tellerfuß fixiert ist und der Tellerfuß einen unteren, vorzugsweise zylindrischen Bereich sowie einen oberen Bereich aufweist und die Querschnittsfläche des oberen Bereichs kleiner ist als die Querschnittsfläche des unteren Bereichs.

### Stand der Technik

Halogenglühlampen werden aufgrund ihrer hohen Lebensdauer und der angenehmen Lichtqualität zunehmend herkömmlichen Glühlampen vorgezogen. Um einen möglichst einfachen Ersatz bestehender Glühlampen durch Halogenglühlampen zu ermöglichen und gleichzeitig die optische Anmutung einer herkömmlichen Glühlampe aus ästhetischen oder funktionalen Gründen beizubehalten, werden häufig Lampen verwendet, bei denen die Außenkontur und damit insbesondere der Außenkolben und der Sockel einer herkömmlicher Glühlampe entsprechen, während innerhalb des Außenkolbens eine Halogenglühlampe als Einbaulampe angeordnet ist. Derartige Lampen werden beispielsweise von der OSRAM GmbH unter der Bezeichnung "HALOLUX® CLASSIC" hergestellt und vertrieben.

Um das Erscheinungsbild wie auch die Leuchteigenschaften einer derartigen Lampe denjenigen einer herkömmlichen Glühlampe anzugleichen, muss der Glühdraht der Einbaulampe annähernd an der gleichen Stelle wie der Glühdraht einer vergleichbaren herkömmlichen Glühlampe angeordnet werden. Dazu muss die wesentlich kompaktere Halogenlampe mittels einer Halterung im Außenkolben positioniert werden.

Eine bei den oben erwähnten "HALOLUX® CLASSIC"-Lampen verwendete Technologie zur Positionierung der Einbaulampe besteht darin, einen gläsernen Tellerfuß vorzusehen, der in den Außenkolben eingeschmolzen wird. In den Tellerfuß ist ein aus Metall gefertigtes Gestell eingeschmolzen, durch das wiederum die Halogeneinbaulampe gehalten wird. Weiterhin sind in den Tellerfuß Stromzuführungen eingeschmolzen, an denen die Stromzuführungen der Einbaulampe angeschweißt werden. Dieser Aufbau benötigt für die Durchführung der Stromzuführungen durch den gläsernen Tellerfuß einen dreiteiligen Aufbau der Stromzuführungen und ist generell durch die Kombination von metallischen und gläsernen Komponenten sehr aufwändig.

Die DE 10 2005 051 076 offenbart einen Lampenträger für die Einbaulampe, der im Wesentlichen aus einem zylindrischen metallischen Montageclip besteht, in den die Einbaulampe eingeschoben wird und der auf gläsernen Fuß aufgeschoben und in dessen unterem, zylindrischen Bereich über Haltenoppen fixiert wird, bevor der gläserne Fuß mit dem Außenkolben verschmolzen wird. Der Montageclip stellt jedoch aufgrund seiner Größe ein sehr auffälliges Bauteil dar und weist eine sehr aufwändige Formgebung auf.

### Darstellung der Erfindung

Der Erfindung liegt daher die Aufgabe zugrunde, eine einseitig gesockelte elektrische Lampe gemäß dem Oberbegriff des Anspruchs 1 zu schaffen, die robust und einfach herstellbar ist.

Diese Aufgabe wird erfindungsgemäß dadurch gelöst, dass der Halteclip am oberen Bereich des Tellerfußes fixiert ist. Dadurch kann der Halteclip in seinen Abmessungen kleiner ausgeführt werden. Zum einen wird der Halteclip kürzer, da er nicht mehr bis zum unteren Bereich des Tellerfußes reichen muss, zum anderen werden die Abmessungen in radialer Richtung reduziert, da zur Fixierung auf dem oberen Bereich des Tellerfußes, der einen geringeren Querschnitt als der untere Bereich aufweist, ein kleinerer Montageclip verwendet werden kann. Durch die reduzierten Abmessungen ist der Montageclip weniger auffällig und die Lampe erweckt den Eindruck einer herkömmlichen Glühlampe. Es werden Rohstoffe eingespart und der Fertigungsprozess der Lampe kann vereinfacht werden. Als oberer Bereich ist dabei der der Einbaulampe zugewandte Bereich des Tellerfußes mit reduzierter Querschnittsfläche zu betrachten. Vorzugsweise wird dies die obere Hälfte, insbesondere das obere Drittel des Tellerfußes einnehmen.

Es ist von Vorteil, wenn der obere Bereich des Tellerfußes mindestens zwei sich in axialer Richtung erstreckende parallele Abschnitte aufweist. Dies können sowohl planparallele Flächen als auch Linien senkrecht zu einem zylindrischen, ovalen oder beliebig vieleckigen Querschnitt sein. Die parallelen Abschnitte ermöglichen eine gute Führung und einen sicheren Halt des Montageclips auf dem Tellerfuß sowohl bei der Herstellung der Lampe als auch im fertigen Zustand. Weiterhin sind parallele Abschnitte einfach herstellbar.

Indem der obere Bereich des Tellerfußes einen rechteckförmigen Querschnitt aufweist, wird eine einfache Geometrie vorgegeben, auf der ein Montageclip wenig aufwändiger Bauart gut gehalten werden kann. Da ein rechteckförmiger Querschnitt im Prinzip aus zwei planparallelen Flächenpaare aufgebaut ist, kann dieser einfach mittels zweier Quetschvorgänge hergestellt werden.

In einer weiteren vorteilhaften Ausbildung der Erfindung weist der obere Bereich des Tellerfußes einen zylindrischen Querschnitt auf. Auch zylindrische Querschnitte können einfach hergestellt werden und ermöglichen eine einfache Befestigung des Montageclips.

Es ist ebenfalls vorteilhaft, wenn der obere Bereich des Tellerfußes in axialer Richtung mindestens eine Nut aufweist. Eine Nut ermöglicht eine gute Führung in linearer Richtung und einen sicheren Halt des Montageclips auf dem Tellerfuß sowohl bei der Herstellung der Lampe als auch im fertigen Zustand. Bei einem zylindrischen Tellerfuß kann so auch der Montageclip einfach vor Verdrehen gesichert werden.

Es ist von besonderem Vorteil, wenn der Montageclip mindestens ein Federelement aufweist. Mittels Federelementen ist einfach eine kraftschlüssige Verbindung erzielbar, die zweckmäßigerweise sowohl zwischen dem Montageclip und dem Tellerfuß als auch zwischen der Einbaulampe und dem Montageclip herzustellen ist. Die Federwirkung erlaubt dabei weiterhin das Ausgleichen von Maßtoleranzen. Auch bei formschlüssigen Verbindungen kann ein Federelement vorteilhaft eingesetzt werden, indem beispielsweise Rastnasen in Vertiefungen gedrückt werden können.

Weiterhin ist es zweckmäßig, wenn der Montageclip in einem unteren Bereich eine Ausnehmung aufweist, deren Form annähernd der Form der Querschnittsfläche des oberen Bereichs des Tellerfußes entspricht. Dadurch wird eine exakte Passung der Ausnehmung auf dem oberen Bereich des Tellerfußes erzielt und der Montageclip somit besonders genau und sicher platziert.

In einer vorteilhaften Ausführungsform weisen der Montageclip im unteren Bereich und/oder die im unteren Bereich angeordnete Ausnehmung einen rechteckförmigen Querschnitt auf. Ein derartiger Querschnitt ist einfach zu fertigen und passt optimal auf einen Tellerfuß, dessen oberer Bereich ebenfalls einen rechteckförmigen Querschnitt aufweist.

Es ist von Vorteil, wenn der Montageclip in einem oberen Bereich mindestens zwei gegenüberliegend angeordnete Federlaschen zur Halterung des Sockels der Einbaulampe aufweist. Dadurch kann die Einbaulampe sicher gehalten und Maßtoleranzen der beteiligten Komponenten ausgeglichen werden

Es ist von besonderem Vorteil, wenn die Einbaulampe einen doppel-T-förmigen Sockel aufweist und die Innenkanten der Flansche des Sockels an den Außenkanten der Federlaschen des Montageclips anliegen. Dadurch wird eine sichere Führung der Einbaulampe bei der Montage erreicht und seitliche Verschiebungen oder Verkippungen der Einbaulampe im Verhältnis zum Montageclip verhindert.

Es ist ebenfalls von besonderem Vorteil, wenn die Breite der Federlaschen zur Halterung des Sockels der Einbaulampe annähernd der Breite des Stegs des Sockels der Einbaulampe entspricht. Dadurch wird auf einfachem Weg gewährleistet, dass die Innenkanten der Flansche des Sockels an den Außenkanten der Federlaschen des Montageclips anliegen.

Vorteilhafterweise weist mindestens eine Federlasche zur Halterung des Sockels der Einbaulampe am oberen Ende mindestens einen Vorsprung, insbesondere eine Noppe und/oder eine Sicke auf. Dadurch wird sowohl ein einfaches Einführen des Sockels in den Montageclip als auch eine gute Halterung dort ermöglicht. Indem der Vorsprung in eine Vertiefung im Sockel eingreift oder über einen Vorsprung auf dem Sockel hinweggeführt wird, kann eine formschlüssige Verbindung erzielt werden.

Es ist zweckmäßig, wenn der Montageclip im unteren Bereich an mindestens einer Kante eine Ausnehmung aufweist und an einer an die Ausnehmung angrenzenden Wandung, vorzugsweise an der an der Längsseite des rechteckförmigen unteren Bereichs angeordneten Wandung, mindestens eine, vorzugsweise durch Abkantung hergestellte Haltelasche angeordnet ist. Ein derartiger Montageclip kann durch Stanzen und Abkanten einfach hergestellt werden und es wird eine gute Führung und Halterung des Montageclips auf dem Tellerfuß erzielt.

Indem der Montageclip im unteren Bereich an mindestens zwei diagonal gegenüberliegenden Kanten eine Ausnehmung mit einer Haltelasche gemäß dem vorhergehenden Anspruch aufweist, wird eine besonders gute Führung und Halterung des Montageclips erreicht.

Es ist zweckmäßig, wenn der Montageclip zwischen dem oberen Bereich und dem unteren Bereich mindestens eine Ausnehmung aufweist. Dadurch sind die Stromzuführungen der Einbaulampe zugänglich und können mit den im Tellerfuß eingebetteten Stromzuführungen verbunden werden.

In einer besonders vorteilhaften Ausbildung der Erfindung ist der Montageclip im unteren Bereich gabelförmig ausgebildet. Als gabelförmig werden im Rahmen dieser Anmeldung insbesondere Ausbildungen angesehen, die mindestens zwei Zinken aufweisen, d.h. zwei Vorsprünge, deren Länge mindestens so groß ist wie deren Breite und zwischen denen eine Ausnehmung angeordnet ist, die der Länge der Vorsprünge annähernd entspricht, wobei die Dicke des Montageclips weniger als die Länge- und/oder Breite des Montageclips, vorzugsweise höchstens die Hälfte, beträgt. Ein derartig ausgebildeter Montageclip ist besonders einfach, beispielsweise durch Stanzen, herstellbar. Der gabelförmige Bereich kann in einfacher Weise zur Befestigung des Montageclips auf dem Tellerfuß verwendet werden, indem der obere Bereich des Tellerfußes beziehungsweise ein geeigneter Teil davon in die Ausnehmung zwischen den Gabelzinken eingeführt wird.

Es ist weiterhin vorteilhaft, wenn der Montageclip im oberen Bereich gabelförmig ausgebildet ist. Die Einbaulampe kann dadurch mit ihrem Sockel besonders einfach in dem Montageclip gehalten werden, der zudem besonders einfach, beispielsweise durch Stanzen, herstellbar ist.

In einer besonders vorteilhaften Ausbildung der Erfindung ist der Montageclip im oberen und im unteren Bereich gabelförmig ausgebildet. Dadurch kann der Montageclip beispielsweise als Stanzteil besonders einfach ausgebildet werden, da keinerlei Abkantungen, Biegevorgänge oder Verbindungsprozesse bei der Herstellung benötigt werden.

Es ist von Vorteil, wenn mindestens eine Zinke des unteren gabelförmigen Bereichs des Montageclips in mindestens eine Nut des oberen Bereichs des Tellerfußes eingreift. Dadurch wird der Montageclip gegen Drehung um die Längsachse ebenso gesichert wie gegen seitliches Verkippen oder Verschieben.

In einer weiteren vorteilhaften Ausbildung der Erfindung weist der gabelförmige untere Bereich des Montageclips mindestens drei Zinken auf. Die mittlere Zinke kann beispielsweise leicht gekröpft oder gebogen angeordnet sein, um zwischen ihr und den äußeren Zinken den Tellerfuß zu halten.

Es ist ebenfalls von Vorteil, wenn mindestens eine Zinke des gabelförmigen unteren Bereichs des Montageclips in eine an der Stirnseite des Tellerfußes angeordnete Vertiefung, insbesondere in ein Pumprohr, eingreift. Pumprohre sind bei Tellerfüßen häufig bereits vorhanden so dass kein zusätzlicher Herstellaufwand für den Tellerfuß anfällt. Der Montageclip wird auf besonders einfache Weise auf dem Tellerfuß gehalten und allseitig gegen Verschiebungen in radialer Richtung gesichert.

Weiterhin ist es vorteilhaft, wenn mindestens eine Zinke mindestens eines gabelförmigen Bereichs als Federelement ausgebildet ist. Dadurch kann diese besonders gut als Haltelement mit den oben beschriebenen Vorteilen eines Federelements verwendet werden.

### Kurze Beschreibung der Zeichnungen

Im Folgenden soll die Erfindung anhand von drei Ausführungsbeispielen dargelegt werden. Gleiche beziehungsweise funktional gleiche Bauteile sind mit gleichen Bezugszahlen gekennzeichnet. Die Figuren zeigen:
- Fig. 1: ein erstes Ausführungsbeispiel einer erfindungsgemäßen Lampe,
- Fig. 2: eine erfindungsgemäße Lampe gemäß dem ersten Ausführungsbeispiel in einer seitlichen Detailansicht,
- Fig. 3: ein zweites Ausführungsbeispiel einer erfindungsgemäßen Lampe in einer Seitenansicht,
- Fig. 4: eine erfindungsgemäße Lampe gemäß dem zweiten Ausführungsbeispiel in einer seitlichen Detailansicht,
- Fig. 5: eine erfindungsgemäße Lampe gemäß dem zweiten Ausführungsbeispiel in Schnittbilddarstellung entlang der Ebene A-A in Figur 4,
- Fig. 6: ein drittes Ausführungsbeispiel einer erfindungsgemäßen Lampe in perspektivischer Ansicht,
- Fig. 7: eine erfindungsgemäße Lampe gemäß dem dritten Ausführungsbeispiel in einer seitlichen Detailansicht.
- Fig. 8: ein Montageclip gemäß dem dritten Ausführungsbeispiel in Perspektive.
- Fig. 9: eine erfindungsgemäße Lampe gemäß dem dritten Ausführungsbeispiel in einer Detailansicht.
- Fig. 10: eine erfindungsgemäße Lampe gemäß dem dritten Ausführungsbeispiel in einer seitlichen Detailansicht.

### Bevorzugte Ausführung der Erfindung

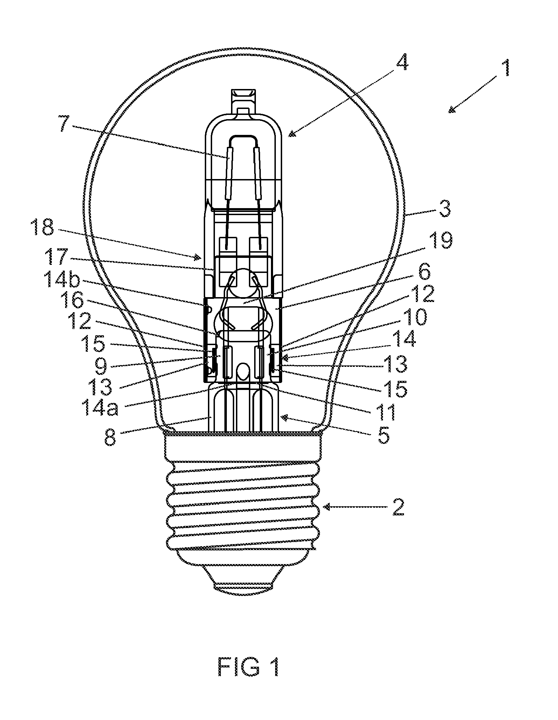

Figur 1 zeigt eine erfindungsgemäße Lampe 1 in einer seitlichen Ansicht. In einem Sockel 2 des handelsüblichen Typs E27 ist ein Außenkolben 3 vom Typ A55 gehalten. Innerhalb des Außenkolbens 3 ist eine Einbaulampe 4 mittels eines auf einem gläsernen Tellerfuß 5 befestigten Montageclips 6 so angeordnet, dass sich ein Glühdraht 7 der Einbaulampe 4 annähernd an der Stelle innerhalb des Außenkolbens 3 befindet, an der bei einer herkömmlichen Glühlampe ebenfalls der Glühdraht angeordnet ist. Der Tellerfuß 5 ist mit dem Außenkolben 3 verschmolzen. Die Einbaulampe 4 ist als so genannte Hochvolt-Halogenlampe in Quetschnoppentechnik ausgeführt und als solche aus dem Stand der Technik bekannt.

Der Tellerfuß 5 weist in einem unteren Bereich 8 einen zylindrischen Querschnitt auf, der sich zu einem oberen Bereich 9 hin verjüngt und in einen rechteckigen Querschnitt übergeht. Der rechteckförmige Bereich 9 kann bei einem gläsernen Tellerfuß 5 leicht durch zweimalige Quetschung unter einem Winkel von 90° erreicht werden. Auf den oberen Bereich 9 des Tellerfußes 5 aufgeschoben ist der Montageclip 6, der aus einem gestanzten und dann rechteckförmig abgekanteten Blech gefertigt wird. Der Montageclip 6 ist in seinem unteren Bereich 10 ebenfalls rechteckförmig ausgebildet, so dass der obere Bereich 9 des Tellerfußes 5 in einer rechteckförmigen Öffnung 11 im unteren Bereich 10 des Montageclips 6 aufgenommen wird. An den in axialer Richtung verlaufenden Kanten 12 des unteren Bereichs 10 des Montageclips 6 sind dabei jeweils Ausnehmungen 13 angeordnet, bei denen an der Längsseite 14a der Wandung 14 des Montageclips 6 jeweils eine Haltelasche 15 angeordnet ist. Diese Haltelaschen 15 liegen leicht federnd am oberen Bereich 9 des Tellerfußes 5 an und sorgen so für eine gute Fixierung. Das Einführen wird durch die Abrundung der Oberkante 16 des Tellerfußes 5 erleichtert. Die Einbaulampe 4 wiederum wird mittels zweier Federlaschen 17 in dem Montageclip 6 gehalten, die im oberen Bereich 18 des Montageclips 6 an den Längsseiten 19 angeordnet sind.

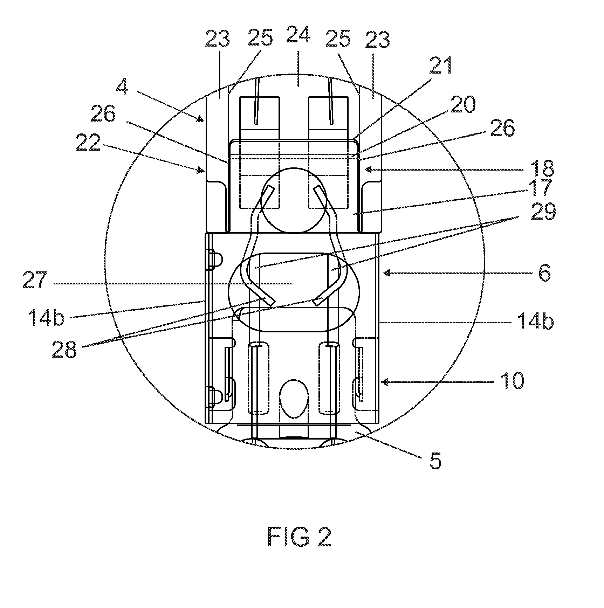

Wie aus Figur 2 ersichtlich, weisen die Federlaschen 17 am oberen Ende eine sich über die gesamte Breite erstreckende Sicke 20 auf. Die Sicke 20 erleichtert einerseits durch ihre obere Anschrägung 21 das Einführen des Sockels 22 der Einbaulampe 4 zwischen den Federlaschen 17 und sorgt andererseits für einen guten Halt. Dies gilt insbesondere für Einbaulampen 4, deren Sockel 22 in Querrichtung Erhebungen aufweist, so dass die Sicke zwischen zwei Erhebungen oder oberhalb der obersten Erhebung quasi einrasten kann und somit die Einbaulampe 4 fest in dem Montageclip 6 fixiert ist. Nach unten stützt sich die Einbaulampe 4 an den Seitenwänden 14b des unteren Bereichs 10 des Montageclips 6 ab.

Der Sockel 22 der Einbaulampe 4 weist einen doppel-T-förmigen Querschnitt mit einem zwischen zwei Flanschen 23 angeordneten Steg 24 auf. Die Federlaschen 17 entsprechen in ihrer Breite dem Steg 24, so dass die Innenkanten 25 der Flansche 23 und die Außenkanten 26 der Federlaschen 17 aneinander anliegen und so eine Führung der Einbaulampe 4 beim Einführen in den Montageclip 6 ebenso wie eine Fixierung der Einbaulampe 4 gegenüber seitlichen Verschiebungen erreicht wird.

Weiterhin weist der Montageclip 6 zwischen dem oberen Bereich 18 und dem unteren Bereich 10 eine Öffnung 27 auf, in der die Stromzuführungen 28 der Einbaulampe 4 und die in den Tellerfuß 5 eingebetteten Stromzuführungen 29 sichtbar sind. Die Öffnung 27 ermöglicht den Zugang zu den Stromzuführungen 28 der Einbaulampe 4 und den in den Tellerfuß 5 eingebetteten Stromzuführungen 29, um diese während der Herstellung der Lampe 1 miteinander zu verschweißen. Diese Verbindung dient gleichzeitig dazu, die Einbaulampe 4 zusätzlich in axialer Richtung zu fixieren.

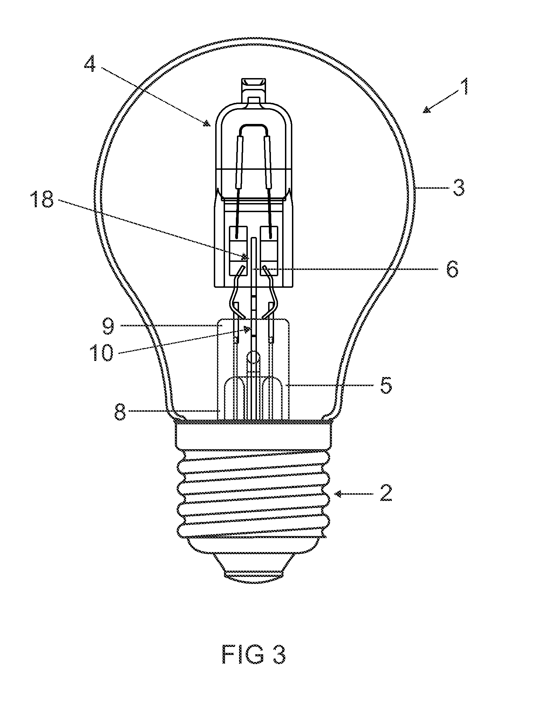

Ein zweites Ausführungsbeispiel einer erfindungsgemäßen Lampe 1 ist in einer Seitenansicht in Figur 3 gezeigt. Der prinzipielle Aufbau mit Sockel 2, Außenkolben 3, mit dem Außenkolben 3 verschmolzenem Tellerfuß 5 und Einbaulampe 4 entspricht der in Figur 1 gezeigten Lampe 1. Im Gegensatz zum ersten Ausführungsbeispiel ist hier jedoch der Montageclip 6 als einfaches Stanzteil aus einem nichtrostenden Federstahl, ausgeführt und damit besonders einfach und kostengünstig herstellbar, da aufwändige Formgebungsprozesse wie Biegen, Abkanten, Schweißen oder Löten entfallen. Der untere Bereich 10 des Montageclips 6 ist auf dem oberen Bereich 9 des Tellerfußes 5 gehalten, während der obere Bereich 18 des Montageclips 6 die Einbaulampe 4 hält. Die Einbaulampe 4 wird zudem auf dem Montageclip 6 insbesondere gegen Verkippen und Verschieben durch die Verbindung zwischen den Stromzuführungen 28 der Einbaulampe 4 und den im Tellerfuß 5 eingeschmolzenen Stromzuführungen 29 gesichert.

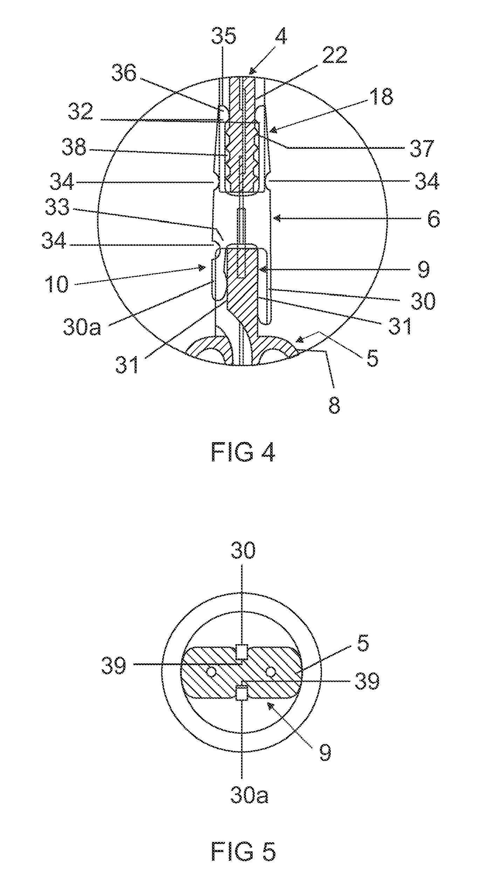

Der obere Bereich 9 des Tellerfußes weist durch einfache Quetschung senkrecht zur Zeichenebene eine geringere Querschnittsfläche auf als der untere Teil 8, was insbesondere in Figur4 deutlich wird, die eine um 90° um die Lampenlängsachse gedrehte Detailansicht des Montageclips 6 zeigt. Weiterhin ist in Figur 4 gut zu erkennen, dass der Montageclip 6 sowohl in seinem unteren Bereich 10 zum Tellerfuß 5 hin als auch in seinem oberen Bereich 18 zur Einbaulampe 4 hin gabelförmig ausgeführt. Dadurch ergibt sich eine besonders einfache Bauweise des Montageclips 6 wie auch des Tellerfußes 5.

Zwei untere Gabelzinken 30, 30a umgreifen den oberen Bereich 9 des Tellerfußes 5, der - im Gegensatz zum vorherigen Ausführungsbeispiel - nicht notwendigerweise rechteckförmig ausgeführt werden muss. Lediglich die Anlageflächen 31 für die Gabelzinken 30, 30a sind annähernd parallel auszuführen.

Weiterhin weisen sowohl zwei obere Gabelzinken 32 als auch eine Gabelzinke 30a im unteren Bereich 10 des Montageclips 6 am Gabelfuß 33 jeweils eine Ausnehmung 34 auf, die dazu führt, dass die Gabelzinken 30a, 32 federnd am Tellerfuß 5 bzw. der Einbaulampe 4 anliegen und damit als Federlaschen wirken. Die federnden Zinken 30a, 32 sind weiterhin an der Gabelspitze 35 jeweils mit einem Vorsprung 36 versehen, der der Halterung und leichteren Einführung der von den Zinken 30, 32 gehaltenen Bauteilen im Montageclip 6 dient. Weist der Sockel 22 der Einbaulampe 4, wie in diesem Ausführungsbeispiel, durch die Quetschung eine Riffelung 37 auf, so greifen die Vorsprünge 36 der Zinken 32 in die Vertiefungen 38 der Riffelung 37 ein, so dass eine formschlüssige Fixierung in axialer Richtung erzielt wird.

Um ein Verkippen oder seitliches Verschieben des Montageclips 6 auf dem Tellerfuß 5 zu verhindern, ist der Tellerfuß 5 im oberen Bereich 9, wie aus Figur 5 ersichtlich, die einen Schnitt senkrecht zur Lampenlängsachse darstellt, auf beiden Seiten mit jeweils einer in axialer Richtung verlaufenden Nut 39 versehen, in der jeweils eine Gabelzinke 30, 30a geführt ist. Die beidseitig angebrachten Nuten 39 verhindern zudem besonders zuverlässig ein Verdrehen des Montageclips 6 um seine Längsachse.

Selbstverständlich sind auch andere Ausführungsformen, beispielsweise mit nur einer Nut 39 im Tellerfuß 5 oder mit einer anderen Gestaltung des Montageclips 6 und dabei insbesondere der Gabelzinken 30, 32 denkbar.

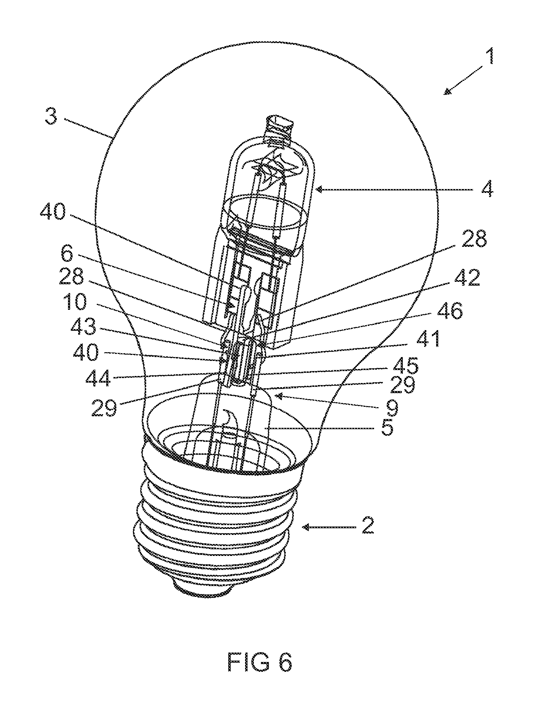

Eine weitere Variante einer erfindungsgemäßen Lampe ist in Figur 6 gezeigt. Der prinzipielle Aufbau mit Sockel 2, Außenkolben 3, mit dem Außenkolben 3 verschmolzenem Tellerfuß 5, Einbaulampe 4 und gabelförmigem Montageclip 6 entspricht der in Figur 3 gezeigten Lampe 1 gemäß dem zweiten Ausführungsbeispiel. Im Gegensatz zum zweiten Ausführungsbeispiel ist hier jedoch der Montageclip 6 im unteren Bereich 10 als dreizinkige Gabel 40 ausgeführt. Der obere Bereich 9 des Tellerfußes 5 ist hierbei im Gegensatz zu den vorherigen Ausführungsbeispielen durch ein zylindrisches Pumprohr 41 gebildet. In einer Öffnung 42 des Pumprohres 41 ist die mittlere Zinke 43 der dreizinkigen Gabel 40 positioniert, während die äußeren Zinken 44, 45 entlang der Außenwand 46 des Pumprohrs 41 nach unten geführt sind. Zusätzlich sind die Einbaulampe 4 und der Montageclip 6 insbesondere gegenüber axialen Bewegungen durch die Verbindung zwischen den Stromzuführungen 28 der Einbaulampe 4 und den im Tellerfuß 5 eingeschmolzenen Stromzuführungen 29 gesichert.

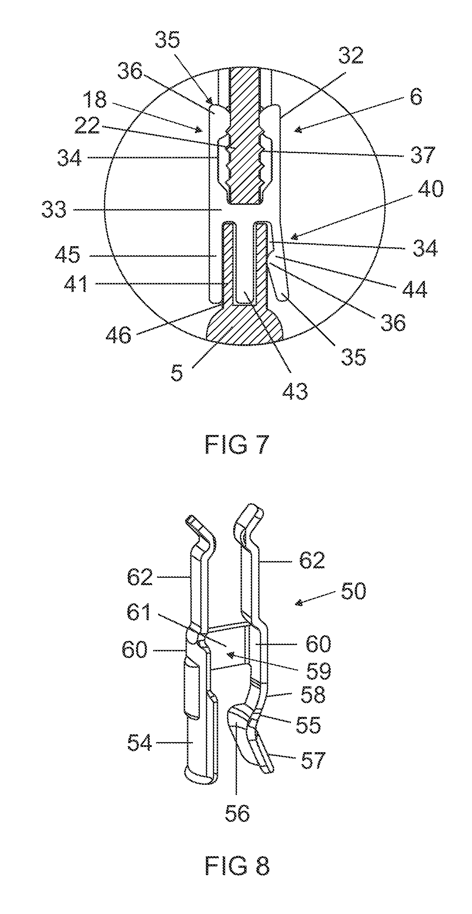

Wie aus Figur 7 ersichtlich, die eine seitliche Detailansicht des Montageclips 6 darstellt, weist eine Zinke 44 der dreizinkigen Gabel 40 am Gabelfuß 33 eine Ausnehmung 34 auf, die direkt in einen Vorsprung 36 übergeht, was dazu führt, dass die gegenüberliegende Zinke 45 federnd am Pumprohr 41 anliegt. Somit wirkt die Zinke 44 als Federlasche. Der Vorsprung 36 ist zur Gabelspitze 35 hin sanft angeschrägt und ermöglicht so neben der sicheren Halterung auch das leichtere Einführen des Montageclips 6 in das Pumprohr 41. Die mittlere Zinke 43 dient im vorliegenden Ausführungsbeispiel zur zusätzlichen Stabilisierung der gesamten Anordnung, insbesondere gegenüber seitlichem Verkippen. Es ist weiterhin auch möglich, mit der Zinke 45 einen Verdrehschutz zu realisieren, indem diese beispielsweise in eine Nut in der Außenwand 46 des Pumprohrs 41 eingreift. Eine andere Möglichkeit, das Verdrehen zu verhindern, besteht beispielsweise darin, dass das Pumprohr 41 einen elliptischen Querschnitt aufweist.

Im oberen Bereich 18 weist der Montageclip 6 zwei Gabelzinken 32 auf, die ebenfalls als Federlaschen wirken. Dazu ist oberhalb des Gabelfußes 33 eine Ausnehmung 34 vorgesehen, die an der Gabelspitze 35 in einen Vorsprung 36 übergeht. Auch hier wird durch die Vorsprünge 36 in Zusammenspiel mit der Riffelung 37 des gequetschten Sockels 22 der Einbaulampe 4 eine formschlüssige Fixierung in axialer Richtung erzielt.

Selbstverständlich sind auch andere Ausführungsformen der Erfindung denkbar, insbesondere für die Gestaltung des Montageclips 6 und hierbei vor allem im oberen Bereich 18, in dem die Einbaulampe 4 gehalten ist. So kann insbesondere die Breite der Federlaschen 17 zwischen der Ausführungsform einer Gabelzinke 32 gemäß dem zweiten und dritten Ausführungsbeispiel und der einer annähernd die gesamte Breite des Sockels 22 abdeckenden Federlasche 17 gemäß dem ersten Ausführungsbeispiel variiert werden.

Anstelle des in den Ausführungsbeispielen gezeigten und für eine Allgebrauchsglühlampe typischen Außenkolbens 3 mit der Bezeichnung A55 sind selbstverständlich auch andere Kolbenformen, wie beispielsweise die Typen A60, R63, R80 oder G95 denkbar, wie auch anstelle des gezeigten Schraubsockels 2 vom Typ E27 andere Sockelgrößen wie beispielsweise E14 oder E40 sowie andere Sockeltypen wie beispielsweise Bajonett- oder Stecksockel möglich sind.

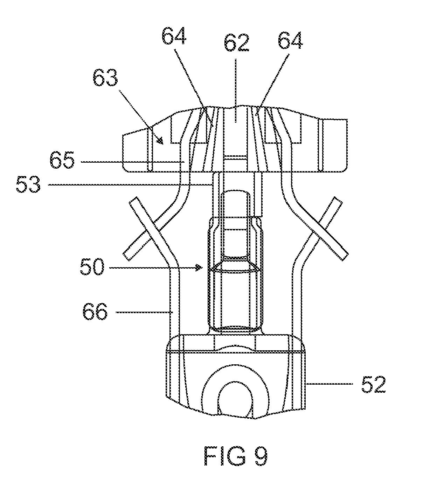

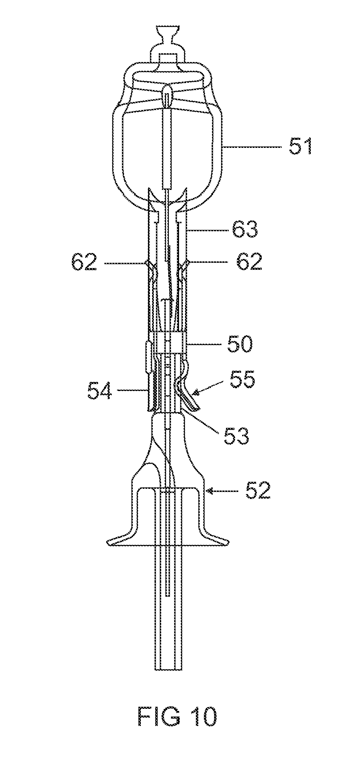

Figur 8 bis 10 zeigt ein weiteres Ausführungsbeispiel eines Montageclips 50. Zur stabilen Befestigung der Einbaulampe 51 auf dem Tellerfuß 52 wird der Montagclip 50 auf einen rohrförmigen oberen Bereich 53 des Tellerfußes aufgeschoben wird. Als rohrförmiger oberer Bereich ist insbesondere überstehendes Pumprohr geeignet. Für eine axial stabile Befestigung sorgt eine teilkreisgerundete Cliplasche 54. Sie ist bevorzugt halbrund bis viertelrund ausgebildet. In ihr liegt dieser obere Bereich 53 konzentrisch. Der Cliplasche 54 gegenüber liegt ein ähnlich gestaltetes Federteil 55. Es ist in einem Abschnitt auch teilkreis-abgerundet, bevorzugt halbschalig, ausgebildet, so dass es am oberen Bereich 53 anliegen kann. Jedoch ist es leicht nach innen bogenförmig gewellt, so dass nur ein Basisteil 56 am oberen Bereich 53 anliegt und davon zwei Flügelteile abstehen. Das erste Flügelteil 57 ist ein freies Ende, das als Fädelhilfe zum Aufsetzen des Montageclips auf den oberen Bereich 53 dient. Das zweite Flügelteil 58 ist das Verbindungsteil vom Basisteil zum Rest des Montageclips. Cliplasche und Federteil sind an ihrem oberen Ende über eine U-förmig abgewinkelte Verbindungsspange 59 miteinander verbunden. Sie weist demgemäß zwei Schenkel 60 und ein Bodenteil 61 auf. An den Schenkeln 60 ist oben jeweils eine Federlasche 62 angesetzt, die sich zur Einbaulampe erstreckt. Dadurch wird die Quetschung 63 der Einbaulampe, die quasi als Glassockel der Einbaulampe dient, zwischen den beiden Federlaschen 62 pinzettenartig gehalten. Durch schräg stehende Stege, die von der Unterkante der Quetschung nach oben zulaufen und deren minimaler Abstand etwas größer als die Breite der Federlaschen 62 ist, oder auch durch lokale Warzen auf der Quetschung zentrieren sich die Federlaschen beim Fügen der Einbaulampe von selbst. Die Einblaulampe 51 wird somit auch axial fixiert. Dann werden die Stromzuführungen 65 der Einbaulampe mit den Zuleitungen 66, die aus dem Tellerfuß 52 herausragen, verschweißt. Dies kann durch Laserschweißen oder auch Widerstandsschweißen erfolgen. Zur zusätzlichen Fixierung können dabei bevorzugt die Zuleitungen 66 und Stromzuführungen 65 schräg nach außen abgebogen sein, also von der Lampenachse weg, aber im wesentlichen in der Ebene der Quetschung bleibend. Zuleitung 66 und Stromzuführung 65 kreuzen sich dadurch x-förmig. Wird ein Stromzuführung vor und die andere verglichen damit hinter der Zuleitung geführt, erhöht sich die Stabilität noch weiter, wie in Figur 9 dargestellt. Auf diese Weise wird eine sehr kostengünstige und stabile Befestigung der Einbaulampe im Außenkolben erreicht.

## Patentansprüche

1. Einseitig gesockelte elektrische Lampe (1) mit einem in einem Sockel (2) gelagerten Außenkolben (3) und mindestens einer innerhalb des Außenkolbens (3) mittels eines Montageclips (6) gehaltenen Einbaulampe (4), wobei der Montageclip (6) an einem Tellerfuß (5) fixiert ist und der Tellerfuß (5) einen unteren Fußbereich (8) sowie einen oberen Fußbereich (9) aufweist und die Querschnittsfläche des oberen Fußbereichs (9) kleiner ist als die Querschnittsfläche des unteren Fußbereichs (8), **dadurch gekennzeichnet, dass** der Montageclip (6) einstückig ist und dass er am oberen Fußbereich (9) fixiert ist.

2. Einseitig gesockelte elektrische Lampe (1) nach Anspruch 1, **dadurch gekennzeichnet, dass** der Montageclip aus einem gestanzten Blech gefertigt ist.

3. Einseitig gesockelte elektrische Lampe (1) nach Anspruch 2, **dadurch gekennzeichnet, dass** das Blech aus einem Federstahl besteht.

4. Einseitig gesockelte elektrische Lampe (1) nach einem der Ansprüche 1 bis 3, **dadurch gekennzeichnet, dass** der obere Fußbereich (9) einen zylindrischen Querschnitt aufweist.

5. Einseitig gesockelte elektrische Lampe (1) nach einem der Ansprüche 1 bis 4, **dadurch gekennzeichnet, dass** der obere Fußbereich (9) in axialer Richtung mindestens eine Nut (39) aufweist.

6. Einseitig gesockelte elektrische Lampe (1) nach einem der Ansprüche 1 bis 5, **dadurch gekennzeichnet, dass** der Montageclip (6) mindestens ein Federelement (15, 17, 32, 30a, 44) aufweist.

7. Einseitig gesockelte elektrische Lampe (1) nach Anspruch 6, **dadurch gekennzeichnet, dass** das Federelement (17, 32) in einem oberen Clipbereich (18) des Montageclips ausgeformt ist.

8. Einseitig gesockelte elektrische Lampe (1) nach einem der Ansprüche 1 bis 7, **dadurch gekennzeichnet, dass** der Montageclip (6) in einem unteren Clipbereich (10) eine Ausnehmung (11) aufweist, deren Form annähernd der Form der Querschnittsfläche des oberen Fußbereichs (9) entspricht.

9. Einseitig gesockelte elektrische Lampe (1) nach einem der Ansprüche 1 bis 8, **dadurch gekennzeichnet, dass** die Einbaulampe einen Sockel (22) mit Steg (24) aufweist, wobei Federlaschen (17) zur Halterung des Sockels (22) der Einbaulampe (4) vorgesehen sind, und die Breite der Federlaschen (17) annähernd der Breite des Stegs (24) des Sockels (22) der Einbaulampe (4) entspricht.

10. Einseitig gesockelte elektrische Lampe (1) nach einem der Ansprüche 1 bis 9, **dadurch gekennzeichnet, dass** mindestens eine Federlasche (17, 32) zur Halterung des Sockels (22) der Einbaulampe (4) am oberen Ende mindestens einen Vorsprung (20, 36), insbesondere eine Noppe (36) und/oder eine Sicke (20), aufweist.

11. Einseitig gesockelte elektrische Lampe (1) nach einem der Ansprüche 1 bis 10, **dadurch gekennzeichnet, dass** der Montageclip (6) zwischen einem oberen Clipbereich (18) und einem unteren Clipbereich (10) mindestens eine Ausnehmung aufweist.

12. Einseitig gesockelte elektrische Lampe (1) nach einem der Ansprüche 1 bis 11, **dadurch gekennzeichnet, dass** der Montageclip (6) in einem unteren Clipbereich (10) gabelförmig ausgebildet ist.

13. Einseitig gesockelte elektrische Lampe (1) nach einem der Ansprüche 1 bis 12, **dadurch gekennzeichnet, dass** der Montageclip (6) in einem oberen Clipbereich (18) gabelförmig ausgebildet ist.

14. Einseitig gesockelte elektrische Lampe (1) nach einem der Ansprüche 12 oder 13, **dadurch gekennzeichnet, dass** mindestens eine Zinke (30) des unteren gabelförmigen Clipbereichs (10) in mindestens eine Nut (39) des oberen Fußbereichs (9) des Tellerfußes (5) eingreift.

15. Einseitig gesockelte elektrische Lampe (1) nach einem der Ansprüche 12 bis 14, **dadurch gekennzeichnet, dass** mindestens eine Zinke (43) des gabelförmigen unteren Clipbereichs (10) des Montageclips (6) in eine an der Stirnseite des Tellerfußes (5) angeordnete Vertiefung (42), insbesondere in ein Pumprohr (41), eingreift.

16. Einseitig gesockelte elektrische Lampe (1) nach einem der Ansprüche 12 bis 15, **dadurch gekennzeichnet, dass** mindestens eine Zinke (30a, 32, 44) mindestens eines gabelförmigen Clipbereichs (10, 18) als Federelement ausgebildet ist.
